Europäisches Patentamt

European Patent Office

Office européen des brevets

(19)

(11) EP 0 574 751 B1

(12) EUROPÄISCHE PATENTSCHRIFT

(45) Veröffentlichungstag und Bekanntmachung des Hinweises auf die Patenterteilung:
30.01.2002 Patentblatt 2002/05

(51) Int Cl.$^7$: H04B 7/005, H04L 25/03

(21) Anmeldenummer: 93108539.3

(22) Anmeldetag: 27.05.1993

(54) **Entzerrerschaltung für Funksignale**

Equaliser circuit for radio signals

Circuit égaliseur pour signaux radio

(84) Benannte Vertragsstaaten:
DE FR GB IT SE

(30) Priorität: 19.06.1992 DE 4220093

(43) Veröffentlichungstag der Anmeldung:
22.12.1993 Patentblatt 1993/51

(73) Patentinhaber: SIEMENS AKTIENGESELLSCHAFT
80333 München (DE)

(72) Erfinder: Ketterling, Hans-Peter, Dipl.-Ing.
W-1000 Berlin 42 (DE)

(56) Entgegenhaltungen:
EP-A- 0 545 159         DE-A- 4 132 738

• International Conference on Communications SUPERCOMM/ICC'92, 14.-18.06.1992, Chicago, US, vol. 2, pages 677-681, IEEE, New York, US;
• IEEE TRANSACTIONS ON VEHICULAR TECHNOLOGY Bd. 40, Nr. 3 , August 1991 , NEW YORK US Seiten 636 - 645 XP266038 N.W.K. LO ET AL.: 'Adaptive Equalization and Diversity Combining for Mobile Radio using Interpolated Channel Estimates.'
• Vehicular Technology Society 42nd VTS Conference 10.-13.05.1992, Denver, US, volume 1, pages 131 - 134, IEEE, New York, US; XP339700;
• IEEE Global Telecommunications Conference GLOBECOM '82, 29.11.-02.12.1982, Miami, US, vol. 1, pages 453-457, IEEE, New York, US;
• PATENT ABSTRACTS OF JAPAN vol. 015, no. 143 (E-1054) & JP-A-03 019 547 (MATSHUSHITA ELECTRIC IND CO LTD)
• PATENT ABSTRACTS OF JAPAN vol. 014, no. 022 (E-874) & JP-A-01 264 034 (NAKAJIMA TOSHIFUMI ET AL.)

## Beschreibung

Die Erfindung betrifft eine Empfangsschaltung für Funksignale.

Schnelle Funkdatenübertragung stößt bei höheren Übertragungsraten, insbesondere beim Überschreiten der Kohärenzbreite, auf große Schwierigkeiten bei der Demodulation der Signale, weil diese durch starke Intersymbolinterferenzen und Verzerrungen infolge von Mehrwegeausbreitungseffekten von der ausgesendeten Form sehr stark abweichen können. Gelingt es, die empfangenen Signale vor der Weiterverarbeitung wieder zu entzerren, so bessert sich die Situation erheblich.

Es sind mehrere Prinzipien zur Realisierung derartiger Entzerrer bekannt geworden, von denen aber nur der hier so genannte algebraische Entzerrer (algebraic equalizer) betrachtet werden soll, der prinzipiell beliebige Übertragungsverzerrungen auszugleichen gestattet und nicht auf dem Prinzip der adaptiven Transversalfilterung oder des adaptiven Feedback-Equalizers beruht und auch nicht den Viterbi -Algorithmus benutzt.

Für die Anwendungsfälle, um die es hier geht, muß man mit Bitraten von 100 kbit/s bis 2 Mbit/s oder darüber rechnen. Die Mehrwegeausbreitung führt dazu, daß die Signalenergie eines Symbolpunktes in Städten auf Zeitintervalle von 3 bis 7 µs verteilt wird. In hügeligen oder ländlichen Gegenden gibt es kaum Echos oder nur solche im Bereich von 10 bis 20 µs oder gar mehr. In bergigen Geländeformen kann man gelegentlich sogar Werte im Bereich von 20 bis 50 µs beobachten. Daraus ergibt sich, daß die Intersymbolinterferenzen sich bei den hier beobachteten Bitraten jeweils über mehrere oder sogar viele Nachbarsymbole erstrecken können.

Bei der Telekommunikation, Kodierung und Übertragung werden bereits digitale Signalprozessoren (wie beispielsweise

TMS 32020 von Texas Instruments) eingesetzt, die die seit langem bekannten mathematischen Methoden der digitalen Signalverarbeitung dezentral unter Echtzeitbedingungen in Geräten nutzbar machen, ohne daß bisher starke empfangsseitige Intersymbolinterferenzen beseitigt werden konnten.

Aus IEEE Transactions on Vehicular Technology, Band 40, Nr. 3, August 1991, New York, Seiten 636 bis 645 N.W.K. Lo et al., "Adaptive Equalization and Diversity Combining a Mobile Radio using Interpolating Channel Estimates" ist es bereits bekannt, bei der digitalen Nachrichtenübertragung eine Kanalschätzung vorzunehmen. Hierbei wird ein sogenannter "Decision-Feed-Back-Equalizer" genutzt, um in Abhängigkeit von Abschätzungen der Kanalimpulsantwort auch ein Empfang von gestörten Signalen zu ermöglichen.

Der Erfindung liegt die Aufgabe zugrunde, den Empfang für einen digitalen Landmobilfunkkanal zu verbessern. Aufgrund von Mehrwegeausbreitungseffekten treten am mobilen Empfangsort starke Intersymbolinterferenzen und Verzerrungen bei der Demodulation im Empfänger auf, die durch einen algebraischen Entzerrer zu beseitigen sind, der nach einer Vermessung des Kanals mit einem bekannten Signal verschieden stark gedämpfte und verzögerte Teilsignale empfängt und mittels eines digitalen Signalprozessors eine Berechnung von geeigneten Koeffizienten sowie die Entzerrung des Signals vornimmt.

Erfindungsgemäß wird die Aufgabe in der in Anspruch 1 dargelegten Weise gelöst.

Die Erfindung beruht auf der Erkenntnis, daß insbesondere bei einem digitalen Landmobilfunkkanal mit Bitraten von 100 kbit/s bis 2 Mbit/s oder mehr, vorteilhaft ein algebraischer Entzerrer eingesetzt werden kann. Sie findet in PSK- oder FSK-Empfängern auf dem Gebiet der elektrischen Nachrichtentechnik zur Entzerrung von digitalen Landmobilfunkkanälen Anwendung und gestattet Störungen des Nachrichtenverkehrs durch Mehrwegeausbreitung und andere Störungen systematischer Natur zu eliminieren. Die jeweils erforderliche Einstellung der Entzerrer wird insbesondere dadurch ermittelt, daß zunächst eine bekannte Signalform übermittelt wird, mit Hilfe derer man aus den Abweichungen des empfangenen vom gesendeten Signal auf die Verzerrungseigenschaften des Übertragungskanals rückschließen kann. Der Funkkanal wird also regelrecht vermessen. Mit dem dadurch gewonnenen Wissen über die Eigenschaften des Kanals, die man kurzzeitig als konstant ansehen kann, die langfristig aber sehr starken Änderungen unterworfen sein können, gelingt es meistens, die empfangenen Signale soweit zu entzerren, daß eine relativ problemlose Weiterverarbeitung möglich ist.

Die Empfangsschaltung besteht bevorzugt aus einem digital abstimmbaren Tuner, einem Kanalverstärker, einem Demodulator und einem NF-Verstärker, wobei zwischen dem Kanalverstärker und dem Demodulator ein algebraischer Entzerrer angeordnet ist. Sämtliche Baugruppen sind digital über ein BUS-Interface, an dem ein Bedien-und Anzeigefeld angeschlossen werden kann, ansteuerbar. Über eine Ein/Ausgabe-Baugruppe wird das Ausgangssignal des Kanalverstärkers zur algebraischen Entzerrung mittels eines digitalen Signalprozessors in eine von diesem verarbeitbare Form gebracht und nach der Entzerrung dem Demodulator bereitgestellt. Die Demodulation erfolgt hardware- und/oder softwaremäßig unter Einbeziehung eines weitern Empfangsprozessors oder des digitalen Signalprozessors (DSP).

Durch den algebraischen Entzerrer, der, nach einer Vermessung des Kanals mit einem bekannten Sendesignal, nahe beieinanderliegende Teilsignale $\underline{s}_{lk}\underline{c}_1 + \underline{s}_{lm}\underline{c}_1$ bzw. $\underline{s}_{lk}\underline{c}_2 + \underline{s}_{1m}\underline{c}_2$ bzw. $\underline{s}_{1k}c_k + \underline{s}_{1m}c_k$ usw. mittels eines digitalen Signalprozessors zu einem resultierenden Ersatzsignal zusammengefasst und äquidistant anordnet $\Sigma\ \underline{c}_i\underline{s}_1(t\text{-}\tau_i)$, wobei die Länge der Zeitintervalle $\tau_i$ gleich der Symbollänge $T_s$ oder bei Überabtastung gleich einem ganzzahligen Teil davon gewählt wird i Ts, und der eine Berechnung von geeigneten Koeffizienten $c_i$ über das Verhältnis der Determinante $D_i$ zur Koeefizienten-Determinante $D$ vornimmt, erfolgt die Entzerrung des Signals näherungsweise mit einer Genauigkeit entsprechend der zeitlichen Auflösung, solange die Koeffizienten-Determinante $D \neq 0$ ist. Nach der Bestimmung der ersten k Nachrichten $s_{1i}$ ist auf die gleiche Weise die nachfolgende k+1. Nachricht bestimmbar oder mit Kenntnis der ersten k Nachrichten $s_{1i}$ bestimmt der digitale Signalprozessor die nachfolgende k+1. Nachricht unter Verwendung der Gleichung

$$\underline{s}_2(k+1) = \underline{s}_1(+1) \cdot \underline{c}_1 + \sum_{i}^{2,k+1} \underline{c}_i \underline{s}_{1i} \tag{20}$$

Bei einer komplexen Auswertung für GMSK mit $BT_s = 0{,}5$ ist eine getrennte Behandlung der I - und Q- Komponenten vorzunehmen, während bei günstigen vorliegenden Verhältnissen eine reale Interpretation der Gleichung ausreicht.

Nachfolgend soll die Erfindung anhand eines Ausführungsbeispieles näher erläutert werden.

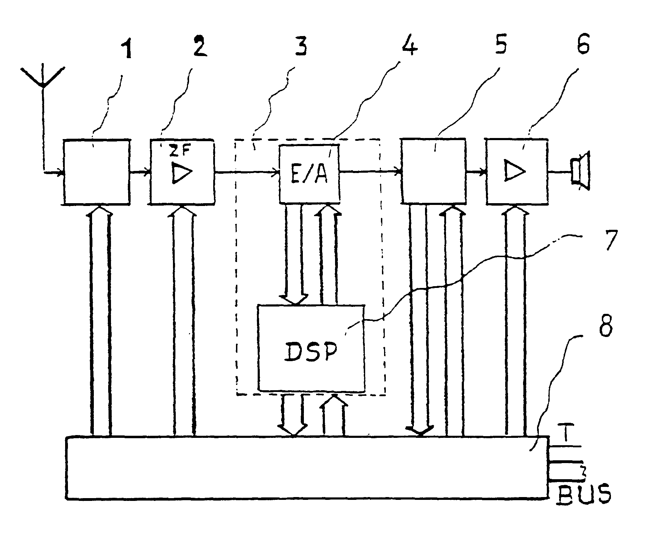

In der einzigen Figur ist das Blockschaltbild einer Empfangsschaltung für einen digitalen Landmobilfunkkanal dargestellt.

Die Empfangsschaltung, bestehend aus einem digital abstimmbaren Tuner 1, einem Kanalverstärker 2, einem Demodulator 5 und einem NF-Verstärker 6, weist zwischen dem Kanalverstärker 2 und dem Demodulator 5 einen algebraischen Entzerrer 3 auf. Sämtliche Baugruppen 1, 2, 3, 5 und 6 sind digital über ein BUS-Interface 8, an dem ein nicht dargestelltes Bedien- und Anzeigefeld angeschlossen werden kann, ansteuerbar.

Die Vermessung des digitalen Landmobilfunkkanals mit den Empfangsbaugruppen 1 und 2 erfolgt in bekannter Weise unter Einbeziehung des Demodulator 5, des DSP 7 und unter Verwendung des BUS-Interfaces 8.

Über eine Ein/Ausgabe-Baugruppe 4 wird das Ausgangssignal des Kanalverstärkers 2 zur algebraischen Entzerrung mittels des DSP 7 in eine von diesem verarbeitbare Form gebracht und nach der Entzerrung dem Demodulator 5 bereitgestellt. Die Demodulation erfolgt hardware- und/oder softwaremäßig unter Einbeziehung eines weitern hier nicht dargestellten Empfangsprozessors oder des DSP 7.

Um die für den Entzerrer notwendigen Eigenschaften festlegen zu können, wird zunächst ein Modell des Übertragungskanals benötigt. Hierzu wird angenommen, daß das ausgesandte Signal über verschiedene Wege direkt und einfach oder mehrfach reflektiert am Empfangsort ankommt. Aufgrund der verschiedenen Eigenschaften all dieser Wege sind die am Empfangsort eintreffenden Teilsignale verschieden stark gedämpft und auch verschieden stark verzögert. Da sich sowohl Empfänger als auch einige Reflektoren bewegen, können die Signale außerdem unterschiedliche Dopplerverschiebungen erleiden. Für das Sendesignal soll gelten:

$$s_1(t) = s_1 \cos[\omega_c + \psi(t)] \tag{1}$$

Dabei ist $s_l$ die Sendeamplitude, $\omega_c$ die Träger(kreis)-frequenz und $\psi$ die Augenblicksphase. Hier soll übrigens Winkelmodulation vorausgesetzt werden, also gilt für das n-te Symbol mit der Information $a_n = \pm 2$

$$\psi(t) = \Delta\psi_0 g(a_n,t) = \int_{-\infty}^{t} \omega_{(t)} d\tau \tag{2}$$

oder

$$\omega_{(t)} = \Delta\omega_0 \int_{-\infty}^{t} h(a_n,t) d\tau \tag{3}$$

wobei $\Delta\psi o$ für den Phasenhub und $\Delta\omega_o$ für den (Kreis-)Frequenzhub steht und g und h Zeitfunktionen zur Beschreibung des Zeitverlaufs von Frequenz und Phase sind.

Dabei ist es gleichgültig, ob es sich um Frequenz- oder Phasenmodulation (FSK oder PSK) handelt.

Jedes der Teilsignale auf der Empfangsseite unterliegt, wie schon erwähnt, unterschiedlicher Dämpfung, Laufzeit und Dopplerverschiebung. Für das i-te Empfangssignal kann man folglich schreiben:

$$s_{2i}(t) = s_{2i} \cos\{(l \pm \frac{v_i}{c}) \cdot [(\omega_c + \Delta\omega \cdot h(a_{ni},(t-\tau_i))] \cdot (t-\tau_i)\} \qquad (4)$$

In vereinfachter Schreibweise kann man dann, wenn $\Delta\omega << \omega_c$ ist, für die Dopplerverschiebung schreiben:

$$\frac{v_i}{c} \cdot \omega_c = \delta\omega_D \qquad (5)$$

$$s_{2i}(t) = s_{2i} \cos\{[\omega_c + \delta\omega_D + \Delta\omega \cdot h(a_{ni},(t-\tau_i))][t-\tau_i]\} \qquad (6)$$

Komplex ausgedrückt ergibt sich daraus:

$$\underline{s}_{2i}(t) = s_{2i} \cdot e^{j(\omega_c + \delta\omega_D + \Delta\omega_h) \cdot (t-\tau_i)} \qquad (7)$$

$$\underline{s}_{2i}(t) = s_{2i} \cdot e^{j(\omega_c + \delta\omega_{Di} + \Delta\omega_h)} \cdot e^{-j(\omega_c + \delta\omega_{Di} + \Delta\omega_h) \cdot \tau_i} \qquad (8)$$

Setzt man das Sendesignal $\underline{s}_l(t)$ ebenfalls komplex an, so folgt

$$\underline{s}_{2i}(t) = \frac{s_{2i}}{s_1} \cdot e^{-j(\omega_c + \delta\omega_{Di} + \Delta\omega_h) \tau_i} \cdot \underline{s}_1(t) \qquad (9)$$

Abgekürzt kann man dafür schreiben:

$$\underline{s}_{2i}(t) = \underline{c}_{2i} \cdot \underline{s}_l(t) \qquad (10)$$

Das gesamte Empfangssignal stellt sich dann als Summe dieser Teilsignale dar:

$$\underline{s}_2(t) = \sum_{i}^{l,k} \underline{s}_{2i}(t) \qquad (11)$$

$$\underline{s}_2(t) = \underline{s}_1(t) \cdot \sum_{i}^{l,k} \underline{c}_{2i}(t) \qquad (12)$$

Für k Ausbreitungspfade ist das Ergebnis für das Empfangssignal als Summe der Teilsignale des Sendesignals für k verschiedene Zeipunkte auffaßbar:

$$\underline{s}_{11}\underline{c}_1 + \underline{s}_{11}\underline{c}_2 + \underline{s}_{11}\underline{c}_3 + \cdots + \underline{s}_{11}\underline{c}_k = \underline{s}_{21}$$
$$\underline{s}_{12}\underline{c}_1 + \underline{s}_{12}\underline{c}_2 + \underline{s}_{12}\underline{c}_3 + \cdots + \underline{s}_{12}\underline{c}_k = \underline{s}_{22}$$
$$\underline{s}_{13}\underline{c}_1 + \underline{s}_{13}\underline{c}_2 + \underline{s}_{13}\underline{c}_3 + \cdots + \underline{s}_{13}\underline{c}_k = \underline{s}_{23}$$
$$\cdots \quad \cdots \quad \cdots \quad \cdots \quad \cdots \quad \cdots \tag{13}$$
$$\cdots \quad \cdots \quad \cdots \quad \cdots \quad \cdots \quad \cdots$$
$$\underline{s}_{1k}\underline{c}_1 + \underline{s}_{1k}\underline{c}_2 + \underline{s}_{1k}\underline{c}_3 + \cdots + \underline{s}_{1k}\underline{c}_k = \underline{s}_{2k}$$

In diesem linearen Gleichungssystem aus k Gleichungen stecken die k unbekannten, komplexen Faktoren $\underline{c}_l$ bis $\underline{c}_k$, die folglich berechnet werden können, wenn $\underline{s}_{11}$ bis $\underline{s}_{1k}$ sowie $\underline{s}_{2l}$ bis $\underline{s}_{2k}$ bekannt sind. Dieses ist aber zu erreichen, indem der Kanal zunächst mit einem bekannten Signal vermessen wird. Die Berechnung der gesuchten Koeffizienten $\underline{c}_i$ erfolgt nach den bekannten Lösungsregeln für derartige Gleichungssysteme und ist eindeutig, sofern die Koeffizienten-Determinante des Systems D $\ddagger$ 0 ist:

$$\underline{D}_1 = \begin{vmatrix} \underline{s}_{21} & \underline{s}_{11} & \cdots & \underline{s}_{11} \\ \underline{s}_{22} & \underline{s}_{12} & \cdots & \underline{s}_{12} \\ \cdot & \cdot & \cdots & \cdot \\ \cdot & \cdot & \cdots & \cdot \\ \underline{s}_{2k} & \underline{s}_{1k} & \cdots & \underline{s}_{1k} \end{vmatrix} \quad \text{usw.} \tag{14}$$

$$\underline{D} = \begin{vmatrix} \underline{s}_{11} & \underline{s}_{11} & \cdots & \underline{s}_{11} \\ \underline{s}_{12} & \underline{s}_{12} & \cdots & \underline{s}_{12} \\ \cdot & \cdot & \cdots & \cdot \\ \cdot & \cdot & \cdots & \cdot \\ \underline{s}_{1k} & \underline{s}_{1k} & \cdots & \underline{s}_{1k} \end{vmatrix} \quad \ddagger \; 0 \tag{15}$$

$$\underline{c}_i = \underline{D}_i/\underline{D} \tag{16}$$

wie oben bereits gezeigt, handelt es sich dabei um ein komplexes Gleichungssystem, so daß man eigentlich zwei Gleichungssysteme erhält, wenn man Real- und Imaginäranteil trennt.

In der vorgenannten Form ist jedoch keine brauchbare Lösung zu erreichen. Anstatt das Empfangssignal allgemein als Summe verschiedener unterschiedlich gedämpfter und verzögerter sowie sonstwie beeinflußter Sendesignale zu sehen, interessiert vielmehr, wie sich das Empfangssignal zu einem gewissen Zeitpunkt aus verschiedenen Sendesignalen zusammensetzt, die zu-verschiedenen Zeitpunkten ausgesendet wurden und zum gleichen Zeitpunkt am Empfangsort eintreffen. Dies kann man folgendermaßen darstellen:

$$\underline{s}_2(t) = \sum_i^{1,k} \underline{c}_i \underline{s}_1(t-\tau_i) \qquad (17)$$

Die exakte Lösung ist schwierig, wenn sehr viele Ausbreitungswege existieren, also k sehr groß ist, weil die $\underline{c}_i$ und die zugehörigen $\tau_i$ nicht bekannt sind.

Überraschenderweise wurde eine durchaus zulässige Näherung für den echten Kanal dadurch modelliert, daß nahe beieinander liegende Teilsignale zu einem resultierenden Ersatzsignal zusammengefaßt und äquidistant angeordnet werden. Die Länge der Zeitintervalle wählt man sinnvoller Weise gleich der Symbollänge $T_S$ oder bei Überabtastung gleich einem ganzzahligen Teil davon, z.B. 1/2, 1/3 oder 1/4. Je weiter man auflöst, desto besser ist die Näherung. Der erforderliche Rechenaufwand erhöht sich dem entsprechend. Die Gleichung (17) läßt sich folglich ersetzen durch:

$$\underline{s}_2(t) = \sum_i^{1,k} \underline{c}_i \underline{s}_1(t-i \cdot T_S) = \sum_i^{1,k} \underline{c}_i \underline{s}_{1i} \qquad (18)$$

Ob diese Beziehung real oder tatsächlich komplex interpretiert werden muß, richtet sich nach den jeweils vorliegenden Verhältnissen. Zum Beispiel ist für GMSK mit $BT_S = 0{,}5$ eine komplexe Auswertung, d.h. eine getrennte Behandlung der I- und Q- Komponenten in Betracht zu ziehen. Die Auflösung sollte mindestenz der Symboldauer entsprechen, kann aber auch feiner sein:

$$mT = T_s \text{ mit } m > 1 \qquad (19)$$

Die Auswertung von (18) erfolgt gemäß Gleichungen (14) bis (16). Für einen gegebenen Kanal und eine bekannte Trainingssequenz bestimmt man im ersten Schritt die gesuchten Koeffizienten $\underline{c}_i$, womit die Eigenschaften des Kanals bekannt sind und für die Übertragung unbekannter Nachrichten zu deren Ermittlung benutzt werden können, solange sich die Eigenschaften des Kanals nicht wesentlich ändern, die Nachrichten also genügend kurz sind. Hierbei gilt für das Ausgangssignal wieder die Beziehung (15), wobei $s_l$ ermittelt werden muß. Bei k Faktoren $\underline{c}_i$ muß man sich also ein System von k Nachrichten $\underline{s}_{2i}$ verschaffen und kann dann auf k verschiedene Nachrichten $\underline{s}_{1i}$ zurückschließen, wieder gemäß (14) bis (16). Nach der Bestimmung der ersten k Nachrichten $\underline{s}_{li}$, gibt es zwei Lösungswege. Entweder man verfährt so analog weiter, oder man benutzt die Gleichung (18) mit der Kenntnis der vorangegangenen Nachrichten $\Sigma \ \underline{c}_i \underline{s}_{li}$ in nachfolgender Gleichung:

$$\underline{s}_2(k+1) = \underline{s}_1(k+1) \cdot \underline{c}_1 + \sum_i^{2,k+1} \underline{c}_i \underline{s}_{1i} \qquad (20)$$

Mit der beschriebenen Arbeitsweise des algebraischen Prozessors werden die in dem empfangenen Signal durch Mehrwegeausbreitung oder ähnliche Störungen vorhandenen Beeinträchtigungen durch Subtraktion etc. eliminiert, so daß am Ausgang des Empfängers das störungsbefreite Signal zur Verfügung steht. Die Signalbefreiung erfolgt dabei sinngemäß entsprechend den ermittelten Koeffizienten in der Weise, daß die aufgefundenen Störungsanteile in dem durch die Koeffizienten bestimmten Maße beseitigt oder mit einer entsprechenden Zeitverschiebung dem Nutzsignal zugefügt werden.

**Patentansprüche**

1. Empfangsschaltung für Funksignale, die einen algebraischen Entzerrer (3) aufweist, mit dem nach der Vermessung eines Funkkanals bezüglich der Abweichung eines empfangenen Signals von einem bekannten Sendesignal eine Entzerrung durchgeführt wird, **dadurch gekennzeichnet**

**daß** nach der Vermessung des Funkkanals zeitlich nahe beieinander liegende und innerhalb eines Symbols eintreffende, über direkten Weg und über einfache oder mehrfache Reflexion empfangene Teilsignale $\underline{s}_{1k}\underline{c}_1 + \underline{s}_{1m}\underline{c}_1$ beziehungsweise $\underline{s}_{1k}\underline{c}_2 + \underline{s}_{1m}\underline{c}_2$ beziehungsweise $\underline{s}_{1k}\underline{c}_k + \underline{s}_{1m}\underline{c}_k$ etc., wobei $\underline{s}_{1k}, \underline{s}_{1m}$ Sendesignale sind, $c_1$ bis $c_k$ komplexe Faktoren, die durch die Vermessung des Funkkanals ermittelt wurden, zu einem resultierenden Ersatzsignal zusammengefaßt und äquidistant angeordnet werden, gemäß der Gleichung

$$\underline{s}_2 \ (t) \ = \ \sum_{i}^{1,k} \ \underline{c}_i \ \cdot \ \underline{s}_1 \ (t-\tau_i) \ = \ \sum_{i}^{1,k} \ \underline{c}_i\underline{s}_{1i}$$

wobei $s_2 (t)$ die Summe der Teilsignale beschreibt und $\tau_i$ ein Zeitintervall, das gleich der übertragene Symbollänge oder einem ganzzahligen Teil davon entspricht, daß dann eine Berechnung der Koeffizienten $\underline{c}_i$ über das Verhältnis der Determinante $\underline{D}_i =$

$$\begin{vmatrix} \underline{s}_{21} & \underline{s}_{11} & \cdots & \underline{s}_{11} \\ \underline{s}_{22} & \underline{s}_{12} & \cdots & \underline{s}_{12} \\ \cdot & \cdot & \cdots & \cdot \\ \cdot & \cdot & \cdots & \cdot \\ \underline{s}_{2k} & \underline{s}_{1k} & \cdots & \underline{s}_{1k} \end{vmatrix}$$

zur Koeffizienten-Determinante $\underline{D} =$

$$\begin{vmatrix} \underline{s}_{11} & \underline{s}_{11} & \cdots & \underline{s}_{11} \\ \underline{s}_{12} & \underline{s}_{12} & \cdots & \underline{s}_{12} \\ & & \cdot & \cdot & \cdots \\ \cdot & & & & \\ \cdot & \cdot & \cdots & \cdot \\ \underline{s}_{1k} & \underline{s}_{1k} & \cdots & \underline{s}_{1k} \end{vmatrix}$$

$\neq 0$ vorgenommen, wobei $\underline{s}_{21} - \underline{s}_{2k}$ die Summe der Teilsignale für die k unterschiedliche Ausbreitungspfade ist, und daß eine komplexe näherungsweise Auswertung der ersten k Nachrichten $s_{1i}$ nacheinander vorgenommen wird.

2. Empfangsschaltung nach Anspruch 1,
   **dadurch gekennzeichnet,**
   **daß** die nachfolgende k+1.Nachricht auf die gleiche Weise wie die ersten k Nachrichten bestimmbar ist, oder für die Auswertung der nachfolgenden k+1.Nachricht die vorherigen Werte der ersten k Nachrichten weiterverwendet werden, nach Gleichung

$$\underline{s}_2 \; (k+1) = \underline{s}_1 \; (k+1) \cdot \underline{c}_1 + \sum_{i}^{2,k+1} \underline{c}_i\underline{s}_{1i}$$

3. Empfangsschaltung nach Anspruch 1 oder Anspruch 2,
   **dadurch gekennzeichnet,**
   **daß** statt der komplexen eine reale Interpretation der Gleichungen im digitalen Signalprozessor (7) erfolgt.

4. Empfangsschaltung nach einem der vorhergehenden Ansprüche,
   **dadurch gekennzeichnet,**
   **daß** der algebraische Entzerrer (3) und der Demodulator (5) sowie gegebenenfalls der NF-Verstärker (6) über ein BUS-Interface (8) digital ansteuerbar ist.

5. Empfangsschaltung nach Anspruch 4,
   **dadurch gekennzeichnet,**
   **daß** die Demodulation hardware- und/oder softwaremäßig unter Einbeziehung eines weiteren Empfangsprozessors oder des digitalen Signalprozessors (7) erfolgt.

6. Empfangsschaltung nach einem der vorangehenden Ansprüche,
   **gekennzeichnet durch** die Anwendung bei einem digitalen Landmobilfunkkanal.

7. Empfangsschaltung nach einem der vorangehenden Ansprüche,
   **dadurch gekennzeichnet,**
   **daß** der algebraische Entzerrer zwischen einer digital ansteuerbaren Empfangsbaugruppe, bestehend aus einem Tuner und einem Kanalverstärker, und einem Demodulator mit nachgeordneten NF-Verstärker angeordnet ist, wobei der algebraische Entzerrer eine Eingangs- und eine Ausgangs-Baugruppe und einen Signalprozessor aufweist, der bei der Ausmessung des digitalen Landmobilfunkkanals mit einem bekannten Signal empfangene Signale auswertet und die für die Entzerrung des empfangenen Signals erforderliche Einstellung steuert.

**Claims**

1. Receive circuit for radio signals, which has an algebraic equalizer (3) with the aid of which, after the measurement of a radio channel, equalization is carried out with reference to the deviation of a received signal from a known transmitted signal, **characterized in that**, after the measurement of the radio channel, component signals $\underline{s}_{1k}\underline{c}_1$ + $\underline{s}_{1m}\underline{c}_1$ or $\underline{s}_{1k}\underline{c}_2$ + $\underline{s}_{1m}\underline{c}_2$ or $\underline{s}_{1k}\underline{c}_k$ + $\underline{s}_{1m}\underline{c}_{k}$, etc., $\underline{s}_{1k}$, $\underline{s}_{1m}$ being transmitted signals, and $c_1$ to $c_k$ being complex factors which were determined by the measurement of the radio channel, said component signals being situated close to one another in time, occurring within a symbol and being received via a direct path and via single or multiple reflection, are combined to form a resulting equivalent signal and arranged equidistantly, in accordance with the equation

$$\underline{s}_2 \; (t) = \sum_{i}^{1,k} \underline{c}_i \cdot \underline{s}_1 \; (t-\tau_i) = \sum_{i}^{1,k} \underline{c}_i\underline{s}_{1i}$$

$s_2(t)$ describing the sum of the component signals and $\tau_i$ being a time interval which is equal to the transmitted symbol length or corresponds to an integral part thereof, **in that** a calculation of the coefficients $\underline{c}_i$ is then undertaken via the ratio of the determinant $\underline{D}_i$ =

$$\begin{vmatrix} \underline{s}_{21} & \underline{s}_{11} & \cdots & \underline{s}_{11} \\ \underline{s}_{22} & \underline{s}_{12} & \cdots & \underline{s}_{12} \\ \cdot & \cdot & \cdots & \cdot \\ \cdot & \cdot & \cdots & \cdot \\ \underline{s}_{2k} & \underline{s}_{1k} & \cdots & \underline{s}_{1k} \end{vmatrix}$$

to the coefficient determinant $\underline{D} =$

$$\begin{vmatrix} \underline{s}_{11} & \underline{s}_{11} & \cdots & \underline{s}_{11} \\ \underline{s}_{12} & \underline{s}_{12} & \cdots & \underline{s}_{12} \\ & & \cdot & \cdot & \cdots \\ \cdot & & & & \\ \cdot & \cdot & \cdots & \cdot \\ \underline{s}_{1k} & \underline{s}_{1k} & \cdots & \underline{s}_{1k} \end{vmatrix}$$

$\neq 0$, $\underline{s}_{21}$ - $\underline{s}_{2k}$ being the sum of the component signals for the k different propagation paths, and **in that** a complex approximate evaluation of the first k messages $s_{1i}$ is successively undertaken.

2. Receive circuit according to Claim 1, **characterized in that** the following k+1-th message can be determined in the same way as the first k messages, or to evaluate the following k+1-th message use is further made of the previous values of the first k messages, in accordance with the equation

$$\underline{s}_2 \ (k+1) \ = \ \underline{s}_1 \ (k+1) \ \cdot \ \underline{c}_1 \ + \ \sum_i^{2,k+1} \ \underline{c}_i \underline{s}_{1i}$$

3. Receive circuit according to Claim 1 or Claim 2, **characterized in that** instead of the complex interpretation of the equations a real one is performed in the digital signal processor (7).

4. Receive circuit according to one of the preceding claims, **characterized in that** the algebraic equalizer (3) and the demodulator (5) as well as, if appropriate, the VF amplifier (6) can be driven digitally via a BUS interface (8).

5. Receive circuit according to Claim 4, **characterized in that** the demodulation is performed by means of hardware and/or software with the inclusion of a further receiving processor or the digital signal processor (7).

6. Receive circuit according to one of the preceding claims, **characterized by** application in a digital terrestrial mobile radio channel.

7. Receive circuit according to one of the preceding claims, **characterized in that** the algebraic equalizer is arranged between a digitally driveable receiving module, comprising a tuner and a channel amplifier, and a demodulator with a downstream VF amplifier, the algebraic equalizer having an input and an output module and a signal processor which during the measurement of the digital terrestrial mobile radio channel evaluates received signals with the aid of a known signal and controls the adjustment required for equalizing the received signal.

**Revendications**

1. Circuit récepteur pour signaux radio, qui présente un correcteur algébrique (3), avec lequel on réalise une correction après la mesure d'un canal radio en ce qui concerne la différence entre un signal reçu et un signal émis connu, **caractérisé en ce que**,

   après la mesure du canal radio, des signaux partiels $\underline{s}_{1k}\underline{c}_1 + \underline{s}_{1m}\underline{c}_1$, respectivement $\underline{s}_{1k}\underline{c}_2 + \underline{s}_{1m}\underline{c}_2$, respectivement $\underline{s}_{1k}\underline{c}_k + \underline{s}_{1m}\underline{c}_k$ etc. se trouvant temporellement proches l'un de l'autre et arrivant dans l'intervalle de temps d'un symbole, reçus par trajet direct et par réflexion simple ou multiple, , $\underline{s}_{1k}$, $\underline{s}_{1m}$ étant des signaux d'émission, $\underline{c}_1$ à $\underline{c}_k$ des facteurs complexes que l'on a déterminés par la mesure du canal radio, sont groupés dans un signal de remplacement résultant et disposés de façon équidistante, selon l'équation

$$\underline{s}_2(t) = \sum_i^{1,k} \underline{c}_i\,\underline{s}_1(t - \tau_i) = \sum_i^{1,k} \underline{c}_i\,\underline{s}_{1i}$$

   dans laquelle $s_2(t)$ décrit la somme des signaux partiels et $\tau_i$ est un intervalle de temps qui correspond exactement à la longueur de symbole transmise ou à une partie entière de celle-ci, **en ce qu'**il est procédé alors à un calcul des coefficients $\underline{c}_i$ par le rapport du déterminant $\underline{D}_i =$

$$\begin{vmatrix} \underline{s}_{21} & \underline{s}_{11} & \cdots & \underline{s}_{11} \\ \underline{s}_{22} & \underline{s}_{12} & \cdots & \underline{s}_{12} \\ \cdot & \cdot & \cdots & \cdot \\ \underline{s}_{2k} & \underline{s}_{1k} & \cdots & \underline{s}_{1k} \end{vmatrix}$$

   au déterminant des coefficients $\underline{D} =$

$$\begin{vmatrix} \underline{s}_{21} & \underline{s}_{11} & \cdots & \underline{s}_{11} \\ \underline{s}_{22} & \underline{s}_{12} & \cdots & \underline{s}_{12} \\ \cdot & \cdot & \cdots & \cdot \\ \underline{s}_{2k} & \underline{s}_{1k} & \cdots & \underline{s}_{1k} \end{vmatrix} \neq 0,$$

   dans lequel $\underline{s}_{21}$ à $\underline{s}_{2k}$ représente la somme des signaux partiels pour k chemins de propagation différents et **en ce que** l'on procède à une évaluation complexe de façon approximative des premiers k messages $\underline{s}_{1i}$, l'un après l'autre.

2. Circuit de réception selon la revendication 1,
   **caractérisé en ce que** le message suivant k+1 peut être déterminé de la même façon que les premiers k messages, où les valeurs précédentes des premiers k messages sont réutilisées pour évaluer le message suivant k+1, d'après l'équation

$$\underline{s}_2(k+1) = \underline{s}_1(k+1).\underline{c}_1 + \sum_i^{2,k+1} \underline{c}_i\,\underline{s}_{1i}$$

3. Circuit de réception selon la revendication 1 ou 2,
   **caractérisé en ce qu'**une interprétation des équations est réalisée dans le domaine réel au lieu du domaine complexe dans le processeur de signaux numériques (7).

4. Circuit de réception selon l'une quelconque des revendications précédentes,
   **caractérisé en ce que** le correcteur algébrique (3) et le démodulateur (5) ainsi qu'éventuellement l'amplificateur BF (6), peuvent être commandés de façon numérique par l'intermédiaire d'une interface de bus (8).

5. Circuit de réception selon la revendication 4,
**caractérisé en ce que** la démodulation se réalise par matériel et/ou par logiciel en incorporant un processeur de réception supplémentaire ou le processeur de signaux numériques (7).

6. Circuit de réception selon l'une quelconque des revendications précédentes,
**caractérisé par** l'application dans un canal radio mobile terrestre numérique.

7. Circuit de réception selon l'une quelconque des revendications précédentes,
**caractérisé en ce que**, le correcteur algébrique est disposé entre un groupe de composants de réception pouvant être commandé de façon numérique, constitué d'un syntoniseur et d'un amplificateur de canal et d'un démodulateur avec un amplificateur BF disposé en aval, le correcteur algébrique présentant un groupe de composants d'entrée et un groupe de composants de sortie et un processeur de signaux qui évalue les signaux reçus lors de la mesure du canal radio mobile terrestre numérique avec un signal connu et commande l'ajustement nécessaire à la correction du signal reçu.